# EUROPEAN PATENT APPLICATION

(11) **EP 1 226 789 A2**
(43) Date of publication of application: **31.07.2002**
(21) Application number: 02001132.6
(22) Date of filing: 24.01.2002
(51) Int. Cl.: A61C 1/08, A61C 1/00, A61C 8/00

(54) **Method and torque control unit for surgical drilling system**

(30) Priority: 25.01.2001 JP 2001017240
(71) Applicant: Nakanishi Inc., Kanuma-shi, Tochigi-ken (JP)
(72) Inventor: Nakanishi, Eiichi, Kanuma-shi, Tochigi-ken (JP); Yoshizawa, Yoshimi, Shioya-gun, Tochigi-ken (JP)
(74) Representative: Wehnert, Werner, Dipl.-Ing. Patentanwälte Hauck, Graalfs, Wehnert, Döring, Siemons

(57) **Abstract**

There is disclosed a torque control unit to be used with an instrument for implant surgery, a drilling system including the control unit, and a method for controlling torque with the control unit. The control unit includes a torque limiter (5) that is detachably attached to the bur (4) of the instrument for presetting and shuts off torque transmission from the bur (4) at a preset torque value, and a control section (3) controlling current value of the driving section (2) of the instrument. The control section (3) includes a detector (331) for detecting a current value of the driving section (2) corresponding to the preset torque value when the torque limiter (5) shuts off torque transmission, a memory (332) for storing the detected current value, and a current controller (333) for controlling a current value of the driving section (2) in accordance with the stored current value.

## Description

The present invention relates to a torque control unit for implant surgery, a drilling system for implant surgery including the torque control unit, and a method for controlling torque with the torque control unit.

Drilling systems for implant surgery are used for cutting bone or teeth to make holes therein, threading the inner surface of such holes, or inserting and fixing implants in the threaded holes. The system includes a handpiece having a bur attached in its distal part for cutting bone or teeth, a rotational driving section having an electrical micro motor and connected to the proximal end of the handpiece for driving and rotating the bur, and a control unit connected to and controlling the driving section. The control unit is connected to a power supply, and functions to control the speed and direction of rotation of the micro motor, and to change the operation mode of the ON/OFF switch either to manual operation at hand or to operation with a foot pedal.

In such conventional drilling systems for implant surgery, the torque of the but is said to be controlled by presetting the relationship between the torque and the current value of the motor, and determining a current value to be applied to the motor in accordance with this relationship.

However, handpieces to be connected to the driving section may have different resistances depending on its model or manufacturer. It is thus almost impossible for the motor, operating at the preset current value, to control the torque of different burs on different handpieces to a constant, desired value corresponding to the current value. Even the same model of handpieces may have different resistances depending on the degree of wearing of gears and the like, and even the same one handpiece may have different resistances as it wears or when used with different burs of different degree of wearing. Such difference in resistance causes undesirable fluctuation in torque of a bur to be rotated.

It is therefore an object of the present invention to provide a torque control unit and a drilling system for implant surgery which may rotate a bur on a handpiece at a desired constant torque irrespective of the kind or degree of wearing of the handpiece.

It is another object of the present invention to provide a method for controlling torque of an instrument for implant surgery which may maintain the torque of a bur on the instrument at a desired constant value irrespective of the kind or degree of wearing of the handpiece.

According to the present invention, there is provided a torque control unit to be used with an instrument for implant surgery, said instrument including a handpiece having a bur for cutting bone or teeth, and a rotational driving section connected to the handpiece for rotationally driving said bur, said torque control unit comprising:
a torque limiter to be detachably connected to a bur in use in a presetting step, said torque limiter shutting off torque transmission from the bur at a preset torque value when the bur is rotated, and
a control section to be connected to a rotational driving section in use for controlling torque of a bur by controlling current value of the driving section, said control section further comprising:
   a detector for detecting, in said presetting step, a current value of the driving section corresponding to said preset torque value when said torque limiter shuts off torque transmission,
   a memory for storing said current value detected by said detector in said presetting step, and
   a current controller for controlling a current value of the driving section in actual use in accordance with said current value stored in said memory.

According to the present invention, there is also provided a drilling system for implant surgery comprising:
a handpiece having a bur in its distal end for cutting bone or teeth,
a rotational driving section connected to a proximal end of said handpiece for rotationally driving said bur, and
a torque control unit for controlling torque of said bur, said torque control unit further comprising:
   a torque limiter to be detachably connected to a bur in a presetting step, said torque limiter shutting off torque transmission from the bur at a preset torque value when the bur is rotated, and
   a control section connected to said rotational driving section for controlling torque of said bur by controlling current value of the driving section, said control section further comprising:
      a detector for detecting, in said presetting step, a current value of the driving section corresponding to said preset torque value when said torque limiter shuts off torque transmission,
      a memory for storing said current value detected by said detector in said presetting step, and
      a current controller for controlling a current value of the driving section in accordance with said current value stored in said memory.

According to the present invention, there is also provided a method for controlling torque of an instrument for implant surgery including a handpiece having a bur for cutting bone or teeth, and a rotational driving section connected to said handpiece for rotationally driving said bur, said method comprising:
connecting to a bur a torque limiter with a preset torque value,
rotating said bur by means of a rotational driving section until said torque limiter shuts off torque transmission from the bur at said preset torque value,
detecting a current value of said rotational driving section when said torque limiter shuts off torque transmission at said preset torque value,
storing said detected current value to complete presetting,
detaching said torque limiter from the bur, and
controlling a current value of the driving section in accordance with said stored current value, to thereby maintain torque of the bur at said preset torque value.

The present invention will be explained in detail with reference to the attached drawings showing illustrative examples of the invention, wherein:
Fig. 1 is a schematic view of the drilling system including the torque control unit according to the present invention; and
Fig. 2 is a block diagram for explaining the function of the drilling system of Fig. 1 according to the present invention.

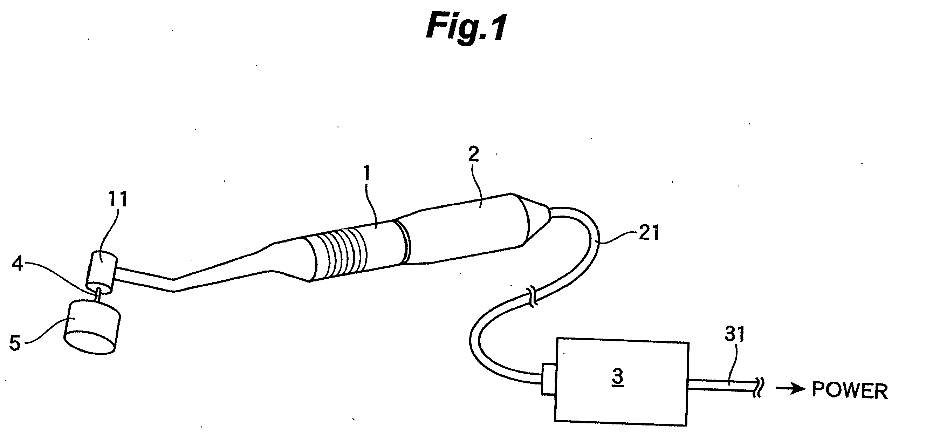

Referring to Fig. 1, an instrument for implant surgery includes a handpiece 1 having a head 11, to which a bur 4 for cutting bone or teeth is attached, and a rotational driving section 2 detachably connected to the proximal end of the handpiece 1. The driving section 2 includes an electric micro motor (not shown) therein, which rotationally drives the bur 4 on the handpiece 1. Since the structure of the handpiece 1, bur 4, and the driving section 2 are conventional, they will not need explanation in further detail.

A torque limiter 5 is shown detachably engaged to the bur 4 in the presetting step to be discussed later. A control unit 3 is connected to the proximal end of the driving section 2 via a connecting cable 21. The control unit 3 is also connected to a power supply (not shown) via a cable 31 for supply of electric power. The torque limiter 5 and the control unit 3 are components of the torque control unit of the present invention, and the instrument for implant surgery and the torque control unit are components of the drilling system of the present invention.

In the torque limiter 5, a predetermined maximum torque value is preset before attached to the bur 4, which value may be determined depending on the desired conditions for the implant surgery. When the bur 4 is rotated by means of the micro motor in the driving section 2, and the torque of the bur 4 reaches the preset maximum torque value, the torque limiter 5 shuts off the torque transmission from the bur 4. The limiter 5 may be of any structure, as long as the limiter may be detachably connected to the bur 4, and may have the above functions.

The control unit 3 has a microcomputer having CPU, ROM, which contains a predetermined program, RAM, and input and output ports. The configuration of these hardware and software realizes the following functions of the parts.

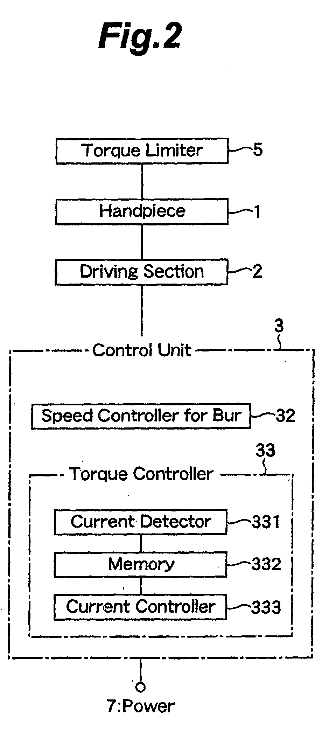

Specifically, referring to Fig. 2, the control unit 3 includes a rotational speed controller 32 for setting and controlling the speed of rotation of the bur 4, and a torque controller 33 for setting and controlling the torque of the bur 4 at a desired value.

The torque controller 33 includes a detector 331, a memory 332, and an electric current controller 333. The detector 331 detects a current value of the rotational driving section 2 in the presetting step when, with the torque limiter 5 attached to the bur 4, the bur 4 reaches the predetermined maximum value preset in the torque limiter 5, and the torque limiter 5 shuts off the torque transmission. The detected current value is stored in the memory 332. The current controller 333 controls the micro motor in the driving section 2 at the current value stored in the memory 332 in the presetting step.

Though not shown in the drawings, the control unit 3 may also have a switch for changing the direction of rotation of the bur 4 between forward and reverse directions, and means for changing the operation mode of the ON/OFF switch either to manual operation at hand or to operation with a foot pedal.

Next, the method for controlling the torque of an instrument for implant surgery according to the present invention is explained.

In the presetting step, the speed of rotation of the bur 4 is set in the control unit 3. For implant surgery, the speed of rotation of the bur 4 is preferably 0 to about 2000 rpm. The torque limiter 5 is set at a value desired as a torque value of the bur 4 in actual use, and attached to the bur 4 on the handpiece 1. The bur 4 is then rotated by means of the micro motor in the driving section 2. When the torque of the bur 4 is increased to reach the maximum value preset in the torque limiter 5, the torque transmission from the bur 4 is shut off in the limiter 5, so that the torque from the bur 4 is maintained at the maximum value. Here, the current value of the micro motor is also constant, which value is detected by the detector 331 and stored in the memory 332. When the detected value is stored in the memory 332, and the torque limiter 5 is detached from the bur 4, the presetting step for calibration of the torque value is completed.

In the actual use of the instrument after the presetting step, when the micro motor in the driving section 2 is driven, the current applied to the micro motor is calibrated and maintained at the value stored in the memory 332 by means of the current controller 333. This in turn maintains the torque of the bur 4 at the preset value.

In this way, the bur of an instrument for implant surgery may be rotated at a desired torque, even if the handpiece is replaced with that of a different manufacturer or of different degree of wearing, by calibrating the torque before the actual use of the instrument.

## Claims

1. A torque control unit to be used with an instrument for implant surgery, said instrument including a handpiece (1) having a bur (4) for cutting bone or teeth, and a rotational driving section (2) connected to the handpiece (1) for rotationally driving said bur (4), said torque control unit comprising:
a torque limiter (5) to be detachably connected to a bur (4) in use in a presetting step, said torque limiter (5) shutting off torque transmission from the bur (4) at a preset torque value when the bur is rotated, and
a control section (3) to be connected to a rotational driving section (2) in use for controlling torque of a bur (4) by controlling current value of the driving section (2), said control section (3) further comprising:
a detector (331) for detecting, in said presetting step, a current value of the driving section (2) corresponding to said preset torque value when said torque limiter (5) shuts off torque transmission,
a memory (332) for storing said current value detected by said detector (331) in said presetting step, and
a current controller (333) for controlling a current value of the driving section (2) in actual use in accordance with said current value stored in said memory (332).

2. A drilling system for implant surgery comprising:
a handpiece (1) having a bur (4) in its distal end for cutting bone or teeth,
a rotational driving section (2) connected to a proximal end of said handpiece (1) for rotationally driving said bur (4), and
a torque control unit for controlling torque of said bur (4), said torque control unit further comprising:
a torque limiter (5) to be detachably connected to a bur (4) in a presetting step, said torque limiter (5) shutting off torque transmission from the bur (4) at a preset torque value when the bur is rotated, and
a control section (3) connected to said rotational driving section (2) for controlling torque of said bur (4) by controlling current value of the driving section (2), said control section (3) further comprising:
a detector (331) for detecting, in said presetting step, a current value of the driving section (2) corresponding to said preset torque value when said torque limiter (5) shuts off torque transmission,
a memory (332) for storing said current value detected by said detector (331) in said presetting step, and
a current controller (333) for controlling a current value of the driving section (2) in accordance with said current value stored in said memory (332).

3. A method for controlling torque of an instrument for implant surgery including a handpiece (1) having a bur (4) for cutting bone or teeth, and a rotational driving section (2) connected to said handpiece (1) for rotationally driving said bur (4), said method comprising:
connecting to abur (4) atorque limiter (5) with apreset torque value,
rotating said bur (4) by means of a rotational driving section (2) until said torque limiter (5) shuts off torque transmission from the bur (4) at said preset torque value,
detecting a current value of said rotational driving section (2) when said torque limiter (5) shuts off torque transmission at said preset torque value,
storing said detected current value in a memory (332) to complete presetting,
detaching said torque limiter (5) from the bur (4), and
controlling a current value of the driving section (2) in accordance with said stored current value, to thereby maintain torque of the bur (4) at said preset torque value.
